# EUROPEAN PATENT SPECIFICATION

(11) **EP 3 622 856 B1**
(45) Date of publication and mention of the grant of the patent: **02.04.2025**
(21) Application number: 18797864.8
(22) Date of filing: 11.05.2018
(51) Int. Cl.: F24F 3/14, A47B 67/00, B01D 46/00, B01D 46/42, D06F 35/00, D06F 73/00, F24F 8/10, F24F 6/04

(54) **MULTIFUNCTIONAL CIRCULATION SYSTEM ENABLING PURIFICATION OF OUTSIDE AIR**
MULTIFUNKTIONALES KREISLAUFSYSTEM ZUR REINIGUNG VON AUSSENLUFT
SYSTÈME DE CIRCULATION MULTIFONCTIONNEL PERMETTANT LA PURIFICATION DE L'AIR EXTÉRIEUR

(30) Priority: 11.05.2017 KR 20170058685; 08.05.2018 KR 20180052670
(43) Date of publication of application: 18.03.2020
(73) Proprietor: Coway Co., Ltd., Gongju-si, Chungcheongnam-do 32508 (KR)
(72) Inventor: KIM, Dong Wook, Seoul 08800 (KR); PARK, Chan Jung, Seoul 08800 (KR); KWON, Sun Dug, Seoul 08800 (KR); YUN, Byung Soo, Seoul 08800 (KR); LEE, Dong Hun, Seoul 08800 (KR); BACK, In Kyu, Seoul 08800 (KR)
(74) Representative: Müller Schupfner & Partner Patent- und Rechtsanwaltspartnerschaft mbB (Hamburg)
(86) International application number: PCT/KR2018/005460
(87) International publication number: WO 2018/208129

(56) References cited:
- EP-A1- 2 107 158
- WO-A1-2013/065925
- JP-B2- 3 321 945
- KR-A- 20080 105 499
- KR-A- 20080 105 499
- KR-A- 20090 102 401
- KR-A- 20090 102 401
- KR-A- 960 033 354
- KR-B1- 100 782 377

## Description

### [TECHNICAL FIELD]

The present invention relates to a multifunctional circulation system capable of purifying outside air, and more particularly, to a technology of a multifunctional circulation system capable of circulating air inside the multifunctional circulation system or purifying air in a space where the multifunctional circulation system is located by controlling opening and closing operations of each of inlet and exhaust ports communicating with the outside air, and a circulating air inlet and a circulating air outlet enabling a storage chamber and a machinery chamber to communicate with each other.

### [BACKGROUND ART]

In wardrobes, cabinets, or clothing management devices, which are kinds of cabinets for storing clothes, beddings, and other household articles, steam is used to remove contaminants and odorous substances such as dust sticking to the articles during the use of the articles by a user, and to improve wrinkles.

When the steam is directly sprayed to the articles such as clothing inside the cabinet, water molecules of the steam are evaporated together with contaminants or odorous substances, thereby removing the contaminants or odorous substances and simultaneously improving the wrinkles.

The "steam" is sprayed in the form of gas when hot water of about 100 degrees is exhausted through a high-pressure nozzle. When the steam is sprayed at the room temperature, the steam may be visible like a hazy smoke.

However, it is reported that a problem may occur because the steam causes damage to the clothing. For example, if hot steam or hot/high pressure steam is directly sprayed onto the clothing which is made of sensitive materials, damage to the materials may occur. In another example, water molecules generated by the steam are sprayed at the room temperature and then condensed while forming water droplets.
In this case, if dehumidification is not carried out effectively, the water droplets may remain on the clothing. If this state lasts for a long time, damage to the clothing, which is made of sensitive materials, may occur.
Further, when the steam is directly sprayed onto a plastic part or the like included in the clothing, a fatal problem may occur because environmental hormones which are very harmful to a human body are generated.
Meanwhile, as air pollution by fine dust and the like becomes serious, devices related to air purification, such as air purifier, have been recently spotlighted. Accordingly, in recent years, there is a very high need for a technology capable of cleaning the clothing and the like stored in the storage chamber while purifying outside air.
KR 2008 0105499 A and KR 2009 0102401 A discloses a cloth treating apparatus but do not teach a dual mode of operation comprising a clothing management mode and an air purifying mode.
(Patent Document 1) Granted Korean Patent No. 10-0672490
(Patent Document 2) Granted Korean Patent No. 10-0672491
(Patent Document 3) Granted Korean Patent No. 10-1443316
(Patent Document 4) Granted Korean Patent No. 10-1498035
(Patent Document 5) Granted Korean Patent No. 10-1083106

### [DETAILED DESCRIPTION OF THE INVENTION]

### [TECHNICAL PROBLEM]

The present invention is adapted to solve the problems above.
Specifically, the present invention suggests a structure of a multifunctional storage system, which is capable of increasing the amount of moisture contained in air circulating through a machinery chamber.

In addition, the present invention suggests a structure and a method for preheating a multifunctional storage system to increase a load applied to an evaporator and a condenser and efficiency in a drying or humidifying mode of the multifunctional storage system by increasing the amount of moisture contained in circulating air.

### [TECHNICAL SOLUTION]

In accordance with an aspect of the present invention, there is provided a multifunctional storage system including: a storage chamber (100); a machinery chamber (200) provided at one side of the storage chamber (100); a dehumidification part (260) configured to dehumidify circulating air flowing in the storage chamber (100); a circulating air inlet (141) and a circulating air outlet (142) configured to allow the storage chamber (100) and the machinery chamber (200) to communicate with each other; and a circulation filter unit (229) configured to supply moisture to the circulating air supplied to the storage chamber (100) via the circulating air inlet (141).

The storage chamber (100) may be heated by the dehumidification part (260).

The machinery chamber (200) further includes: an intake port (210) and an exhaust port (250) configured to allow outside air to communicate with the machinery chamber (200); and a purification filter unit (219) configured to filter the outside air introduced through the intake port (210).

The multifunctional storage system further includes: a first flow path switching member (241) configured to open or close the circulating air inlet (141); and a second flow path switching member (242) configured to open or close the circulating air outlet (142).

The machinery chamber (200) further includes: a fan unit (230) configured to circulate air in one direction; a first flow path (220) configured to allow the intake port (210) and the fan unit (230) to communicate with each other; and a second flow path (240) configured to communicate with each of the exhaust port (250), the fan unit (230), the first flow path (220), and the storage chamber (100).

The first and second flow path switching members (241 and 242) may allow the second flow path (240) to selectively communicate with the exhaust port (250) or the storage chamber (100).

The machinery chamber (200) may further include: a supply water tank (270); and a condensate water tank (280), and the circulation filter unit (229) may be provided on the first flow path (220), the circulation filter unit (229) may receive moisture from the supply water tank (270), and condensate water generated from the circulating air of the storage chamber (100) and the machinery chamber (200) may be stored in the condensate water tank (280).

The second flow path (240) may be located above the fan unit (230) and the first flow path (220).

The circulating air inlet (141) and the circulating air outlet (142) may be located between the second flow path (240) and the storage chamber (100), the circulating air inlet (141) may be configured to communicate with the fan unit (230) such that air is exhausted from the machinery chamber (200) toward the storage chamber (100), and the circulating air outlet (142) may be configured to circulate air from the storage chamber (100) toward the machinery chamber (200).

A portion in communication with the circulating air inlet (141) in the storage chamber (100) may be inclined upward, so that the air introduced from the circulating air inlet (141) is exhausted into the storage chamber (100) while forming a predetermined angle from a bottom surface of an inside of the storage chamber (100).

The multifunctional storage system may further include: a door (600) configured to cover front surfaces of the machinery chamber (200) and the storage chamber (100) except for the intake port (210), wherein the door (600) may include: a controller (610); and an exhaust door (650) configured to open and close the exhaust port (250), and the exhaust door (650) may be opened in an air purifying mode and closed in a clothing management mode.

A recirculation module (300) including a recirculation fan may be provided at an upper end of the storage chamber (100), and the recirculation module (300) may exhaust air toward a lower portion of an inside of the storage chamber (100).

In a clothing management mode where the dehumidification part (260) operates, natural humidifying air generated by the circulation filter unit (229) is configured to be supplied to the storage chamber (100) and circulated therein in a state in which the machinery chamber (200) is blocked from the outside air and communicates with the storage chamber (100).

In the clothing management mode, the circulating air inlet (141) and the circulating air outlet (142) are opened, and the intake port (210) and the exhaust port (250) are closed.

The natural humidifying air may be supplied to the storage chamber (100) by the fan unit (230) and circulated therein.

In the clothing management mode, air that flows by the fan unit (230) may circulate through the machinery chamber (200) and the storage chamber (100) while sequentially flowing through the second flow path (240), the circulating air inlet (141), the storage chamber (100), the circulating air outlet (142), the second flow path (240), the first flow path (220) and the fan unit (230).

In an air purifying mode for filtering the outside air, the machinery chamber (200) is configured to be blocked from the storage chamber (100) and communicate with the outside air so that air filtered by the purification filter unit (219) is exhausted to an outside.

In the air purifying mode, the circulating air inlet (141) and the circulating air outlet (142) are configured to be closed, and the intake port (210) and the exhaust port (250) are configured to be opened.

In the air purifying mode, the air introduced through the intake port (210) may sequentially flow through the purification filter unit (219), the first flow path (220), the fan unit (230), the second flow path (240) and the exhaust port (250).

The multifunctional storage system may further include operation modes of: a full circulation mode in which the machinery chamber (200) communicates with both the outside air and the storage chamber (100); and a full blocking mode in which the machinery chamber (200) is blocked from both the outside air and the storage chamber (100).

In the clothing management mode, warm air may be generated by heat generated from the fan unit (230) and the dehumidification part (260) and may be exhausted to the storage chamber (100).

In the clothing management mode, the natural humidifying air may be primarily exhausted to the storage chamber (100) and the warm air may be exhausted to the storage chamber (100) after the exhaust of the natural humidifying air is stopped.

### [ADVANTAGEOUS EFFECTS OF THE INVENTION]

According to the present invention, it is possible to remove contaminants or odorous substances without using steam and to improve wrinkles. Since the steam is not used, damage to the clothing or the like and generation of environmental hormones can be basically prevented.

In addition, the phenomenon, in which condensate water is excessively generated due to the use of the steam, can be suppressed so that a user does not need to frequently discard a condensate storage unit, improving the convenience of use. Further, since the steam is not used, noise generated when the steam is generated can be diminished and power consumption can be reduced.

In addition, according to the present invention, a hybrid multifunctional storage system capable of managing the clothing and purifying the air can be provided, in which contaminants and odorous substances in the storage chamber can be effectively removed without being exhausted to the outside in the clothing management mode, and the outside air is purified in the air purifying mode similarly to a general air purifier.

To this end, the present invention has a simple structure in which the exhaust port or the storage chamber can be selectively communicated by providing first and second flow path switching members, such that it is easy to change the operation mode between the clothing management mode and the air purifying mode.

In addition, according to the present invention, the air flows through the circulation filter unit in the clothing management mode, and flows through the purifying filter unit in the air purifying mode, thereby maximizing the efficiency of each mode.

### [DESCRIPTION OF THE DRAWINGS]

Fig. 1 is a perspective view showing an external appearance of a multifunctional storage system according to the present invention.
Fig. 2 is a perspective view showing an inside of a multifunctional storage system according to the present invention, in which a casing, a door and a recirculation module are omitted for explanation.
Fig. 3 is a right side view showing an inside of a multifunctional storage system according to the invention.
Fig. 4 is a perspective view showing an inside of a machinery chamber of a multifunctional storage system according to the present invention.
Fig. 5 is a schematic diagram for explaining an operation mode of a multifunctional storage system according to the present invention
Fig. 6 is a schematic diagram for explaining a clothing management mode of a multifunctional storage system according to the present invention.
Fig. 7 is a schematic diagram for explaining an air purifying mode of a multifunctional storage system according to the present invention.

### [BEST MODE]

Hereinafter, the multifunctional storage system according to the present invention will be described with reference to the drawings.

For the purpose of explanation, terms such as front (X axis), rear (-X axis), right (Y axis), left (-Y axis), upward (Z axis), and downward (-Z axis) are used. Although a coordinate system is shown in the drawing, this is for illustrative purposes only and the present invention is not limited to those directions.

### Description of the structure of the multifunctional storing system

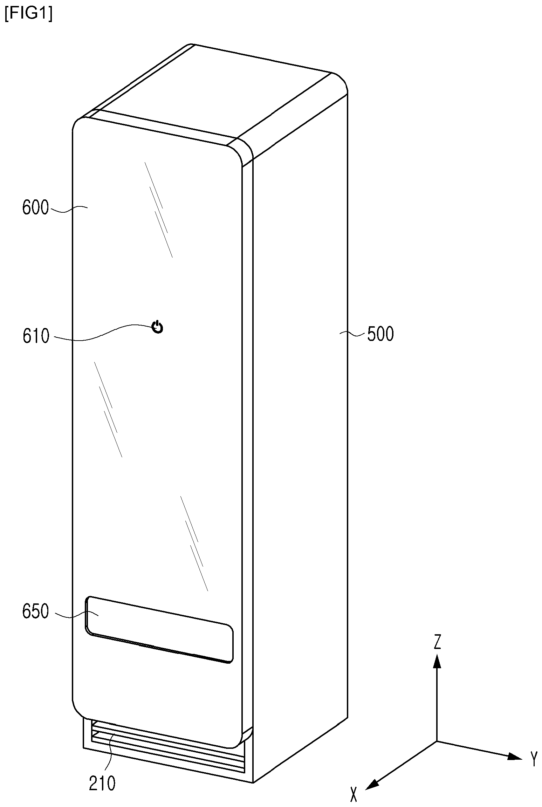

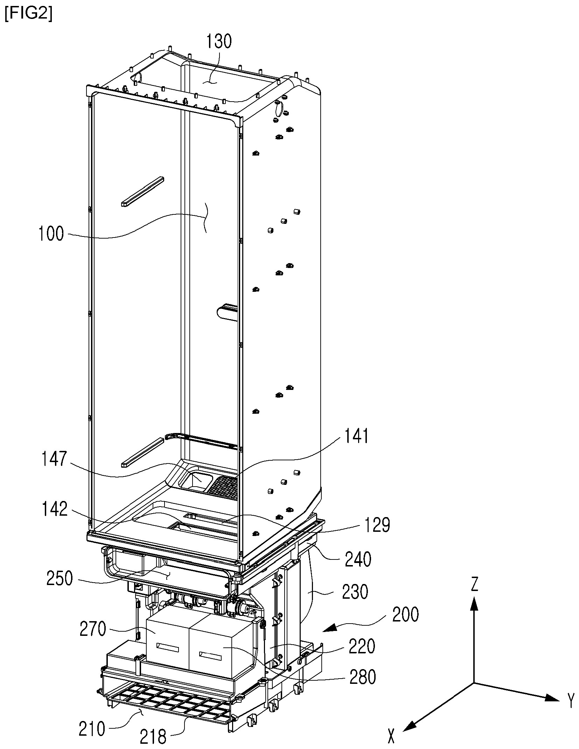

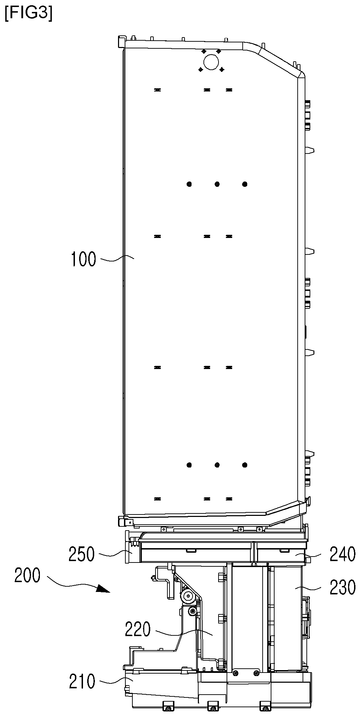

The multifunctional storage system according to the present invention will be described with reference to Figs. 1 to 5.

The multifunctional storage system according to the present invention may include a storage chamber (100), a machinery chamber (200), a recirculation module (300), a casing (500), and a door (600).

The storage chamber (100) is a space in which clothing and the like are stored and contaminants and odorous substances are removed therefrom. To this end, the inside of the storage chamber (100) may rise to a high temperature and natural humidifying air may be introduced into the storage chamber (100) and circulated therein as circulating air. Details thereof will be described below with reference to the operation mode.

At a lower surface of an inside of the storage chamber (100), there are located a circulation filter mounting part (129), a circulating air inlet (141), a circulating air outlet (142) and a functional material storage part (147).

The circulation filter mounting part (129) may be an opening configured to easily attach or detach a circulation filter unit (229) for repair or replacement of the circulation filter unit (229) located in the machinery chamber (200). The circulating air inlet (141) and the circulating air outlet (142) may be openings through which the circulating air inside the storage chamber (100) flows in and out of the machinery chamber (200).

The circulating air inlet (141) may communicate with a fan unit (230) and may be configured to exhaust air from the machinery chamber (200) toward the storage chamber (100), and the circulating air outlet (142) may be configured such that the air circulates from the storage chamber (100) to the machinery chamber (200).

In addition, a portion in communication with the circulating air inlet (141) in the storage chamber (100) may be inclined upward, such that the air introduced from the circulating air inlet (141) may be exhausted to the inside of the storage chamber (100) while forming a predetermined angle from a bottom surface of the inside of the storage chamber (100). Accordingly, the circulating air exhausted from the circulating air inlet (141) may come into contact with the clothing or the like stored in the storage chamber (100) in a larger area than when the circulating air is exhausted in a vertical direction, thereby improving the cleaning efficiency.

The functional material storage part (147) may be a space for storing materials having a function other than a function of removing the contaminants or odorous substances of articles such as clothing and the like stored in the storage chamber (100). For example, a fragrant material may be stored in the functional material storage part (147) to exhaust fragrance to the storage chamber (100). In addition, the functional material may be periodically filled by a user.

A recirculation module mounting part (130) on which the recirculation module (300) is mounted may be located at an inner upper portion of the storage chamber (100). The recirculation module (300) may be provided with an air shot hanger (not shown) having an air shot function.

Alternatively, a hanger (not shown) may be located at the center of the inner upper portion of the storage chamber (100), and a trousers hanger (not shown) may be further located at left and right inner side walls.

The machinery chamber (200) may be a space for performing the air purifying mode and for circulating the air in the air purifying mode by receiving the air from the storage chamber (100), filtering the air, and exhausting the natural humidifying air as circulating air.

The machinery chamber (200) may be located in any direction with respect to the storage chamber (100), but is preferably located below the storage chamber (100). In this case, condensate water or saturated humid air condensed in the storage chamber (100) may be introduced into the machinery chamber (200) due to the weight thereof and exhausted to the outside through the condensate water tank (280).

The machinery chamber (200) may include an intake port (210), a first flow path (220), a fan unit (230), a second flow path (240), an exhaust port (250), a dehumidification part (260), a supply water tank (270), and a condensate water tank (280).

The intake port (210) may be a portion that sucks the outside air into the machinery chamber (200). The intake port (210) may be selectively opened or closed. For example, the intake pot (210) may be opened in the air purifying mode and closed in the clothing management mode. The intake port (210) may be preferably located below the exhaust port (250) described below, and more preferably located at the lowest end of the machinery chamber (200). In this case, since the intake port (210) is closed in the clothing management mode, the circulating flow path of the circulating air can be more simplified, and it is preferable when the door (600) does not reach the intake port (210).

A purification filter unit mounting part (218) may be positioned at the intake port (210), and a purification filter unit (219) may be located in the purification filter unit mounting part (218). The purification filter unit (219) may function to filter the outside air introduced in the air purifying mode, and may include a pre-filter, a hepa filter, and the like, but is not limited thereto.

The first flow path (220) may communicate with the intake port (210), the second flow path (230), and the fan unit (230). The outside air, which is introduced through the intake port (210) and filtered in the air purifying mode, and the circulating air, which is introduced through the second flow path (230) in the clothing management mode, may flow into the first flow path (220).

The circulation filter unit (229) is positioned inside the first flow path (220). The circulation filter unit (229) may function to filter the circulating air. The circulation filter unit (229) may include a humidification filter, and therefore, when water stored in the supply water tank (270) is supplied to the humidification filter, moisture is supplied to the circulating air passing through the humidification filter so that natural humidifying air is generated. The user may detach or attach the circulation filter unit (229) by opening the door (600) and accessing the circulation filter mounting part (129).

According to another embodiment of the present invention, heat may be applied to the humidification filter provided in the circulation filter unit (229) or to a tubing connecting the supply water tank (270) to the humidification filter, such that the temperature of the natural humidifying air may rise to a certain level and the natural humidifying air having the temperature of certain level may be supplied to the storage chamber (100). A separate heating member (not shown) may be used to apply heat, and heat generated by the dehumidification part (260) to be described below in the dehumidification process may be used.

An inlet side of the fan unit (230) may communicate with the first flow path (220) to impart power to introduce the air into the first flow path (220). The outside air may be introduced into the first flow path (220) in the air purifying mode by the operation of the fan unit (230), and air inside the storage chamber (100) is introduced into the first flow path (220) as the circulating air in the clothing management mode. An outlet side of the fan unit (230) may communicate with the second flow path (240). In addition, since the exhaust port (250) is positioned above the intake port (210) and the storage chamber (100) is positioned above the machinery chamber (200), the second flow path that can communicate with the exhaust port (250) may be positioned above the fan unit (230) and the first flow path (220).

The second flow path (240) may receive filtered outside air or circulating air from the fan unit (230). The second flow path (240) may selectively communicate with any one of the storage chamber (100) and the exhaust port (250), and may include a first flow path switching member (241) and a second flow path switching member (242) to control the storage chamber (100) and the exhaust port (250). The first flow path switching member (241) and the second flow path switching member (242) may operate in association with each other to switch the flow path. In one embodiment, the first flow path switching member (241) and the second flow path switching member (242) may be members that rotate about an axis, but any mechanism for selectively switching the flow path may be adopted.

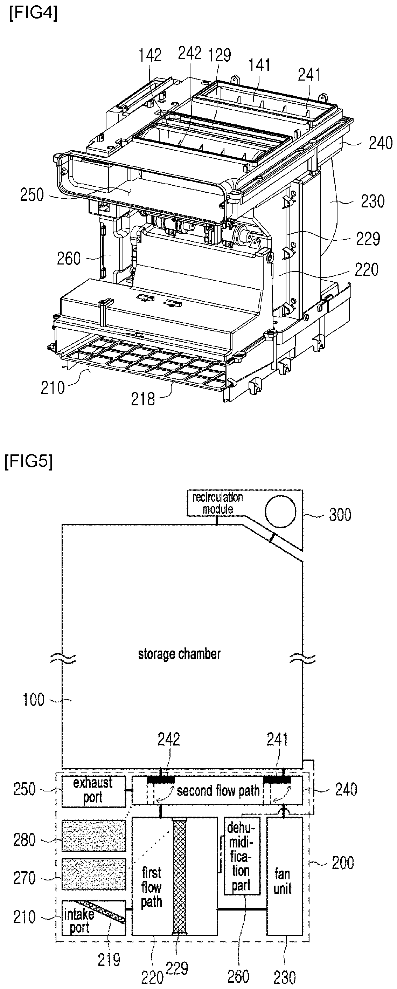

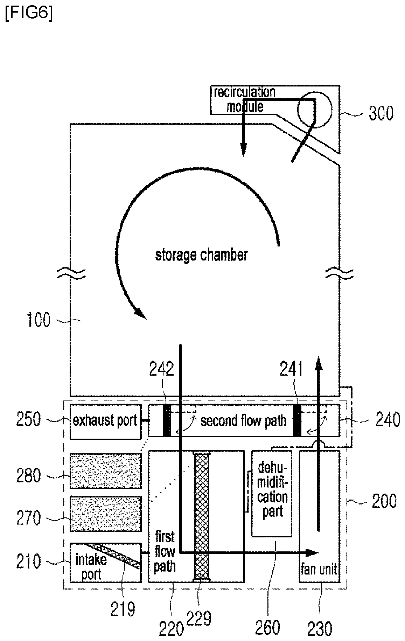

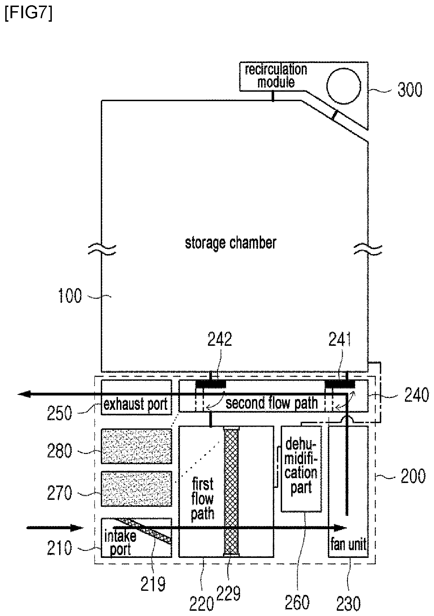

The first flow path switching member (241) and the second flow path switching member (242) may allow the second flow path (240) to be blocked from the storage chamber (100) and communicate with the exhaust port (250) in the air purifying mode (see Figs. 5 and 7) and may allow the second flow path (240) to communicate with the storage chamber (100) and to be blocked from the exhaust port (250) in the clothing management mode (see FIG. 6).
That is, in the clothing management mode, the circulating air of the second flow path (240) may be introduced into the storage chamber (100) through the circulating air inlet (141) located above the first flow path switching member (241), and the circulating air inside the storage chamber (100) may be exhausted to the second flow path (240) through the circulating air outlet (142) located above the second flow path switching member (242) so that the air can be circulated. Details thereof will be described below in the operation modes.

The exhaust port (250) may receive the filtered outside air from the second flow path (240) and exhausts the filtered outside air to the outside. An exhaust door (650) may be positioned outside the door (600) corresponding to the exhaust port (250) to open or close the exhaust port (250). For example, the exhaust door (650) may be opened in the air purifying mode to exhaust the filtered outside air from the exhaust port (250), and the exhaust door (650) may be closed in the clothing management mode.

The dehumidification part (260) may perform a function of dehumidifying the circulating air flowing through the storage chamber (100). Dehumidification may be required to finely keep the inside of the storage chamber (100) and the circulating air and to prevent recontamination. The circulating air in the storage chamber (100) may be dehumidified, or the circulating air flowing from the storage chamber (100) to the machinery chamber (200) may be dehumidified. The dehumidification part (260) may be, for example, a heat pump, but is not limited thereto. Heat may be generated while the dehumidification part (260) performs the dehumidification operation. The heat is not discarded and may be used in the clothing management mode (indicated by a dashed line in Figs. 5 to 7). For example, after the storage chamber (100) is heated to about 50 to 70 degrees by using the heat generated during the dehumidification process by the dehumidification part (260), the circulating air having the room temperature may be received from the second air flow path (240) through the circulating air inlet (141) to remove contaminants or odorous substances from the clothing or the like. According to another example, as described above, the heat generated during the dehumidification process by the dehumidification part (260) may be supplied to the humidification filter of the circulation filter unit (229) or to the tubing connecting the supply water tank (270) and the humidification filter in order to heat the natural humidifying air which functions as a circulating air.
The above-described temperature is an example only, and the present invention is not limited thereto and may be variously changed. In addition, only one of the dehumidification part (260) and the circulation filter unit (229) (that is, the humidification filter) may be selectively operated so as not to interfere with each other.

According to another embodiment of the present invention, in the clothing management mode, the heat generated from the fan unit (230) or generated during the dehumidification process of the dehumidification part (260) may be used or warm air generated by a separate heating member (not shown) may be exhausted into the storage chamber (100). The circulating air may be converted into a natural humidifying air by receiving moisture from the circulation filter unit (229), which will be described below, and the natural humidifying air is combined with the warm air supplied from the fan unit (230) to remove contaminants and odorous substances from the stored clothing. To this end, the dehumidification part (260) or the separate heating member (not shown) may be positioned adjacent to the circulating air inlet (141). In addition, the user may control the amount of natural humidifying air and the amount of warm air, and the control method optimized according to the type and material of the clothing to be stored may be provided as a separate mode.

Meanwhile, according to another embodiment of the present invention, a full circulation mode in which the machinery chamber (200) communicates with both the outside air and the storage chamber (100), and a full blocking mode in which the machinery chamber (200) is blocked from both the outside air and the storage chamber (100) may be further provided, which will be described below.

The supply water tank (270) may store water to be supplied to the humidification filter provided in the circulation filter unit (229). To this end, the supply water tank (270) may be connected to the circulation filter unit (229) through the tubing. The condensate water tank (280) may collect and store the condensate water generated in the storage chamber (100), or may collect and store the condensate water which is generated as the saturated humid air generated in the storage chamber (100) is condensed while flowing through the first flow path (220) or the second flow path (240) of the machinery chamber (200). To this end, the condensate water tank (280) may be connected to the storage chamber (100) and/or the first flow path (220) and/or the second flow path (220) through the tubing.

In order to fill the water or discard the filled condensate water, it is desirable for a user to easily access both the supply water tank (270) and the condensate water tank (280). To this end, the supply water tank (270) and the condensate water tank (280) may be preferably located at the front surface of the machinery chamber (200) so that the user can easily attach or detach the supply water tank (270) and the condensate water tank (280) by opening the door (600) and manipulating a handle located in each water tank located below the exhaust port (250).

The recirculation module (300) may assist the recirculation of the circulating air of the storage chamber (100) in the air purifying mode, and may perform a function of assisting the direct drying of clothing and the like. In addition, the recirculation module (300) may operate independently from the operation of the machinery chamber (200) such that the recirculation module (300) may operate as a dust brush for the clothing stored in the storage chamber (100).

The casing (500) may form the external appearance of the multifunctional storage system.

The door (600) may form a front surface of the multifunctional storage system, and a user may access the inside of the storage chamber (100) by opening the door (600). When the user opens the door (600), the inside of the storage chamber (100) may be exposed in the storage chamber (100), and the exhaust port (250), the supply water tank (270), and the condensate water tank (280) are exposed in the machinery chamber (200). However, the door (600) does not cover the intake port (210). The lowest end of the door (600) may be located above the intake port (210). This is to purify the air even when the door (600) is not opened in the air purifying mode.

A controller (610) and the exhaust door (650) may be located on the outer surface of the door (600). The controller (610) may include an input unit for selecting an operation mode and an output unit for outputting a current operation state. The exhaust door (650) may communicate with the exhaust port (250) of the machinery chamber (200). Thus, the exhaust door (650) is opened even when the door (600) is not opened in the air purifying mode so that the filtered outside air may be exhausted.

The door (600) is preferably formed of a half-mirror. In this case, the clothing located inside the storage chamber (100) may be shown to the user, if necessary, and the door (600) may serve as a mirror in order to provide convenience to the user who takes out the clothing and the like from the storage chamber (100).

### Description of the operation modes of the multifunctional storage system

The operation modes of the multifunctional storage system according to the present invention will be described with reference to Figs. 5 to 7.

First, the 'clothing management mode' will be described with reference to Fig. 6.

The clothing management mode is for removing contaminants or odorous substances from the clothing located inside the storage chamber (100). By circulating the natural humidifying air as the circulating air, the inside of the storage chamber (100) may have a wet environment, such that contaminants or odorous substances may be removed from the clothing together with humid air, and the contaminants or odorous substances may be introduced into the machinery chamber (200) and exhausted in the form of the condensate water. In this process, the dehumidification part (260) may dehumidify the circulating air flowing through the storage chamber (100). Alternatively, the inside of the storage chamber (100) may be heated using heat generated from the dehumidification part (260).

When the user selects the clothing management mode, the exhaust door (650) of the door (600) may be closed and the intake port (210) may also be closed. That is, the air in the storage chamber (100) may not be substantially exhausted to the outside in the clothing management mode.

The dehumidification part (260) may dehumidify the circulating air flowing through the storage chamber (100). Alternatively, the heat generated in this process may heat the inside of the storage chamber (100), and the temperature may be in the range of 50°C to 70°C, but the present invention is not limited thereto.
The first flow path switching member (241) and the second flow path switching member (242) of the machinery chamber (200) may operate to allow the second flow path (240) to communicate with the storage chamber (100) and the first flow path (220), and to be blocked from the exhaust port (250). The water of the supply water tank (270) may be supplied to the humidification filter so that the humidification filter provided in the circulation filter unit (229) may contain moisture. In this process, the humidification filter or the water supplied to the humidification filter may be heated by the heat generated from the dehumidification part (260) or a separate heating member (not shown).

Upon or after the dehumidification process, the fan unit (230) may operate. As the fan unit (230) operates, the air inside the storage chamber (100) may flow into the second flow path (240) through the circulating air outlet (142), and then flow again into the first flow path (220) toward the fan unit (230). In this process, the air may be converted into the natural humidifying air by passing through the humidification filter of the circulation filter unit (229). Then, the natural humidifying air may be supplied to the storage chamber (100) by passing through the second flow path (240) and the circulating air inlet (141).

As the above process is repeated, the circulating air may be continuously circulated between the storage chamber (100) and the machinery chamber (200). The circulating air may contain the contaminants or odorous substances in the storage chamber (100), but may not exhaust the contaminants or odorous substances to the outside, thereby providing a comfortable environment for the user. At the same time, once the circulating air containing the contaminants or odorous substances enters the machinery chamber (200), the circulating air is filtered by the circulation filter unit (229), condensed as the condensate water, and collected separately in the condensate water tank (280). Thus, it is very advantageous because recontamination, which is caused by the substance or odorous substance supplied again into the storage chamber (100), may not occur.

Meanwhile, in the clothing management mode, the warm air may be generated by the fan unit (230), the dehumidification part (260) or a separate heating member (not shown) and the warm air may be exhausted to the storage chamber (100). In this case, the natural humidifying air may be primarily exhausted to the storage chamber (100) and then the warm air (100) may be exhausted to the storage chamber (100) after the natural humidifying air has been exhausted.

The recirculation module (300) may assist the circulation of the circulating air. Since the recirculation module (300) recirculates the circulating air at the upper portion of the storage chamber (100), convection may be more smoothly performed throughout the storage chamber (100).

According to another embodiment of the present invention, it is possible to implement only the dust brush function for the clothing stored in the storage chamber (100) by operating only the recirculation module (300) without operating the mechanism inside the machinery chamber (200).

Next, the 'air purifying mode' will be described with reference to Fig. 7.

The air purifying mode is for performing the function of purifying the outside air by operating only the machinery chamber (200) independently from the storage chamber (100). That is, since clean clothing and the like may be located inside the storage chamber (100) in a state where the outside air is contaminated, the outside air may not be introduced into the storage chamber (100) in the air purifying mode.

When the user selects the air purifying mode, the exhaust door (650) of the door (600) may be opened and the intake port (210) may also be opened.

Then, the first flow path switching member (241) and the second flow path switching member (242) of the machinery chamber (200) may operate to allow the second flow path (240) to communicate with the exhaust port (250) and to be blocked from the storage chamber (100) and the first flow path (220). In this process, the storage chamber (100) may become an independent space from the machinery chamber (200).

Then, the fan unit (230) may operate. As the fan unit (230) operate, the outside air may flow into the first flow path (220) through the intake port (210) toward the fan unit (230). While passing through the intake port (210), the outside air may be filtered by the purification filter unit 219 located in the intake port (210). In addition, the outside air may be further filtered by the circulation filter unit (229) located in the first flow path (220) while passing through the first flow path (220).
In this case, the humidification filter located in the circulation filter unit (229) may or may not perform the humidification function according to the user's selection. If the outside air is humidified, the supply water tank (270) may supply the water to the humidification filter similarly to the clothing management mode. The filtered outside air passing through the fan unit (230) may be exhausted to the outside through the exhaust port (250) by passing through the second flow path (240).

As the above process is repeated, the multifunctional storage system according to the present invention may perform the function of an air purifier. The outside air may be continuously introduced into the machinery chamber (200) and filtered, and the filtered air may be continuously exhausted.

It is advantageous because the air purifying mode may be performed regardless of whether the user opens the door (600). Even during the air purifying mode, the user may freely open the door (600) to place the clothing or the like inside the storage chamber (100) or to take out the clothing or the like. At any time, the supply water tank (270) may be filled with water and the water in the condensate water tank (280) may be exhausted. Since the door (600) may not cover the intake port (210) and the exhaust port (250) may be opened inside the door (600), the opening of the door (600) does not affect the operation of the air purifying mode.

The user can confirm whether the current operation mode is the air purifying mode or the clothing management mode from a location far away from the multifunctional storage system, that is, from a location where the controller (610) is rarely visible, by checking only the opening state of the exhaust door (650).

Even when the filter is contaminated due to the continuous operation of the air purifying mode or the clothing management mode, the user can easily replace the filter. In the case of the purification filter unit (219), the filter may be replaced by inserting a hand into the intake port (210) located below the door (600). In the case of the circulation filter unit (229), the filter may be replaced by opening the door (600) and manipulating the circulation filter mounting part (129).

Meanwhile, another embodiment of the multifunctional storage system of the present invention may further include a full circulation mode and a full blocking mode in addition to the clothing management mode and the air purifying mode described above.

First, the full circulation mode is for allowing the purification filter unit (219) provided in the machinery chamber (200) to communicate with the storage chamber (100) as well as the outside air of the multifunctional storage system. The air inside the storage chamber (100) may be introduced into the purification filter unit (219) and filtered, and the outside air of the multifunctional storage system may also be introduced and filtered. The above circulation mode may be advantageous when it is necessary to rapidly circulate and purify the air under the condition that the quality of indoor air (that is, the outside air) and the air inside the storage chamber (100) is not too poor.

On the contrary to the full circulation mode, the full blocking mode is for allowing the machinery chamber (200) to be blocked from the storage chamber (100) as well as the outside air of the multifunctional storage system. For example, it is advantageous when the performance of the purification filter unit (219) is degraded so that it is needed to replace the purification filter unit (219), when it is not particularly required to filter the inside of the storage chamber (100) and the inside air, and when only the preheating of the machinery chamber (200) is necessary.

Although the present invention has been described with reference to the embodiments shown in the drawings such that those skilled in the art can easily understand and reproduce the present invention, the embodiments are illustrative purposes only, and those skilled in the art may understand that various modifications and equivalents are possible from the embodiments of the present invention. Therefore, the protection scope of the present invention will be defined by the claims.

### [Description of Reference Numerals]

100: storage chamber
129: circulation filter mounting part
130: recirculation module mounting part
141: circulating air inlet
142: circulating air outlet
147: functional material storage part
200: machinery chamber
210: intake vent
218: purification filter unit mounting part
219: purification filter unit
220: first flow path
229: circulation filter unit
230: fan unit
240: second flow path
241: first flow path switching member
242: second flow path switching member
250: exhaust port
260: dehumidification part
270: supply water tank
280: condensate water tank
300: recirculation module
500: casing
600: door
610: controller
650: exhaust door

## Claims

1. A multifunctional storage system comprising:
a storage chamber (100);
a machinery chamber (200) provided at one side of the storage chamber (100);
a dehumidification part (260) configured to dehumidify circulating air flowing in the storage chamber (100);
a circulating air inlet (141) and a circulating air outlet (142) configured to allow the storage chamber (100) and the machinery chamber (200) to communicate with each other; and
a circulation filter unit (229) configured to supply moisture to the circulating air supplied to the storage chamber (100) via the circulating air inlet (141),
wherein the machinery chamber (200) further comprises:
a fan unit (230) configured to circulate air in one direction;
an intake port (210) and an exhaust port (250) configured to allow outside air to communicate with the machinery chamber (200);
a purification filter unit (219) configured to filter the outside air introduced through the intake port (210);
a first flow path switching member (241) configured to open or close the circulating air inlet (141); and
a second flow path switching member (242) configured to open or close the circulating air outlet (142); and
a first flow path (220) configured to allow the intake port (210) and the fan unit (230) to communicate with each other; and
a second flow path (240) configured to communicate with each of the exhaust port (250), the fan unit (230), the first flow path (220), and the storage chamber (100);
wherein in a clothing management mode where the dehumidification part (260) operates, natural humidifying air generated by the circulation filter unit (229) is configured to be supplied to the storage chamber (100) and circulated therein in a state in which the machinery chamber (200) is blocked from the outside air and communicates with the storage chamber (100), the circulating air inlet (141) and the circulating air outlet (142) are configured to be opened, and the intake port (210) and the exhaust port (250) are configured to be closed;
wherein, in an air purifying mode for filtering the outside air, the machinery chamber (200) is configured to be blocked from the storage chamber (100) and communicates with the outside air so that air filtered by the purification filter unit (219) is exhausted to an outside, the circulating air inlet (141) and the circulating air outlet (142) are configured to be closed, and the intake port (210) and the exhaust port (250) are configured to be opened.

2. The multifunctional storage system of claim 1, wherein the first and second flow path switching members (241 and 242) allow the second flow path (240) to selectively communicate with the exhaust port (250) or the storage chamber (100).

3. The multifunctional storage system of claim 1, wherein the machinery chamber (200) further comprises:
a supply water tank (270); and
a condensate water tank (280), and
the circulation filter unit (229) is provided on the first flow path (220), the circulation filter unit (229) receives moisture from the supply water tank (270), and condensate water generated from the circulating air of the storage chamber (100) and the machinery chamber (200) is stored in the condensate water tank (280).

4. The multifunctional storage system of claim 1, wherein the second flow path (240) is located above the fan unit (230) and the first flow path (220).

5. The multifunctional storage system of claim 1, wherein the circulating air inlet (141) and the circulating air outlet (142) are located between the second flow path (240) and the storage chamber (100), the circulating air inlet (141) is configured to communicate with the fan unit (230) such that air is exhausted from the machinery chamber (200) toward the storage chamber (100), and the circulating air outlet (142) is configured to circulate air from the storage chamber (100) toward the machinery chamber (200).

6. The multifunctional storage system of claim 5, wherein a portion in communication with the circulating air inlet (141) in the storage chamber 100 is inclined upward, so that the air introduced from the circulating air inlet (141) is exhausted into the storage chamber (100) while forming a predetermined angle from a bottom surface of an inside of the storage chamber (100).

7. The multifunctional storage system of claim 1, further comprising:
a door (600) configured to cover front surfaces of the machinery chamber (200) and the storage chamber (100) except for the intake port (210),
wherein the door (600) comprises:
a controller (610); and
an exhaust door (650) configured to open and close the exhaust port (250), and
the exhaust door (650) is opened in an air purifying mode and closed in a clothing management mode.

8. The multifunctional storage system of claim 1, wherein a recirculation module (300) comprising a recirculation fan is provided at an upper end of the storage chamber (100), and the recirculation module (300) exhausts air toward a lower portion of an inside of the storage chamber (100).

## Patentansprüche

1. Ein multifunktionales Lagerungssystem umfassend:
eine Lagerungskammer (100);
eine Maschinenkammer (200), die an einer Seite der Lagerungskammer bereitgestellt ist (100);
ein Entfeuchtungsteil (260), das so konfiguriert ist, dass es in der Lagerungskammer (100) strömende Zirkulationsluft entfeuchtet;
einen Zirkulationslufteinlass (141) und einen Zirkulationsluftauslass (142), die so konfiguriert sind, dass die Lagerungskammer (100) und die Maschinenkammer (200) miteinander kommunizieren können; und
eine Zirkulationsfiltereinheit (229), die so konfiguriert ist, dass sie der Zirkulationsluft, die der Lagerungskammer (100) über den Zirkulationslufteinlass (141) zugeführt wird, Feuchtigkeit zuführt,
wobei die Maschinenkammer (200) weiterhin umfasst:
eine Ventilatoreinheit (230), die so konfiguriert ist, dass sie Luft in eine Richtung zirkulieren lässt;
eine Eintrittsöffnung (210) und eine Austrittsöffnung (250), die so konfiguriert sind, dass Außenluft mit der Maschinenkammer (200) kommunizieren kann;
eine Reinigungsfiltereinheit (219), die so konfiguriert ist, dass sie die durch die Eintrittsöffnung (210) eingeleitete Außenluft filtert;
ein erstes Strömungsweg-Schaltelement (241), das so konfiguriert ist, dass es den Zirkulationslufteinlass (141) öffnet oder schließt; und
ein zweites Strömungsweg-Schaltelement (242), das so konfiguriert ist, dass es den Zirkulationsluftauslass (142) öffnet oder schließt; und
einen ersten Strömungsweg (220), der so konfiguriert ist, dass die Eintrittsöffnung (210) und die Ventilatoreinheit (230) miteinander kommunizieren können; und
einen zweiten Strömungsweg (240), der so konfiguriert ist, dass er mit jeder der Austrittsöffnung (250), der Ventilatoreinheit (230), dem ersten Strömungsweg (220) und der Lagerungskammer (100) kommuniziert;
wobei in einem Kleidungsmanagementmodus, in dem der Entfeuchtungsteil (260) arbeitet, natürliche Befeuchtungsluft, die von der Zirkulationsfiltereinheit (229) erzeugt wird, so konfiguriert ist, dass sie der Lagerungskammer (100) zugeführt wird und darin in einem Zustand zirkuliert, in dem die Maschinenkammer (200) von der Außenluft abgeschlossen ist und mit der Lagerungskammer (100) kommuniziert, der Zirkulationslufteinlass (141) und der Zirkulationsluftauslass (142) so konfiguriert sind, dass sie geöffnet sind, und die Eintrittsöffnung (210) und die Austrittsöffnung (250) so konfiguriert sind, dass sie geschlossen sind;
wobei in einem Luftreinigungsmodus zum Filtern der Außenluft die Maschinenkammer (200) so konfiguriert ist, dass sie von der Lagerungskammer (100) abgeschlossen ist und mit der Außenluft kommuniziert, so dass die von der Reinigungsfiltereinheit (219) gefilterte Luft nach außen austritt, der Zirkulationslufteinlass (141) und der Zirkulationsluftauslass (142) so konfiguriert sind, dass sie geschlossen sind, und die Eintrittsöffnung (210) und die Austrittsöffnung (250) so konfiguriert sind, dass sie geöffnet sind.

2. Das multifunktionale Lagerungssystem nach Anspruch 1, wobei die ersten und zweiten Strömungsweg-Schaltelemente (241 und 242) es dem zweiten Strömungsweg (240) ermöglichen, wahlweise mit der Austrittsöffnung (250) oder der Lagerungskammer (100) zu kommunizieren.

3. Das multifunktionale Lagerungssystem nach Anspruch 1, wobei die Maschinenkammer (200) weiterhin umfasst:
einen Versorgungswassertank (270); und
einen Kondensatwassertank (280), und
die Zirkulationsfiltereinheit (229) auf dem ersten Strömungsweg (220) bereitgestellt ist, die Zirkulationsfiltereinheit (229) Feuchtigkeit aus dem Versorgungswassertank (270) aufnimmt, und Kondenswasser, das aus der Zirkulationsluft der Lagerungskammer (100) und der Maschinenkammer (200) erzeugt wird, in dem Kondensatwassertank (280) gespeichert wird.

4. Das multifunktionale Lagerungssystem nach Anspruch 1, wobei der zweite Strömungsweg (240) oberhalb der Ventilatoreinheit (230) und des ersten Strömungswegs (220) angeordnet ist.

5. Das multifunktionales Lagerungssystem nach Anspruch 1, wobei der Zirkulationslufteinlass (141) und der Zirkulationsluftauslass (142) zwischen dem zweiten Strömungsweg (240) und der Lagerungskammer (100) angeordnet sind, der Zirkulationslufteinlass (141) so konfiguriert ist, dass er mit der Ventilatoreinheit (230) kommuniziert, so dass Luft aus der Maschinenkammer (200) in Richtung der Lagerungskammer (100) austritt, und der Zirkulationsluftauslass (142) so konfiguriert ist, dass er Luft aus der Lagerungskammer (100) in Richtung der Maschinenkammer (200) zirkulieren lässt.

6. Das multifunktionales Lagerungssystem nach Anspruch 5, wobei ein mit dem Zirkulationslufteinlass (141) in der Lagerungskammer (100) kommunizierender Bereich nach oben geneigt ist, so dass die vom Zirkulationslufteinlass (141) eingeleitete Luft in die Lagerungskammer (100) austritt, während sie einen vorbestimmten Winkel von einer Bodenoberfläche im Inneren der Lagerungskammer (100) bildet.

7. Das multifunktionales Lagerungssystem nach Anspruch 1, weiterhin umfassend:
eine Tür (600), die so konfiguriert ist, dass sie vordere Oberflächen der Maschinenkammer (200) und der Lagerungskammer (100) mit Ausnahme der Eintrittsöffnung (210) abdeckt,
wobei die Tür (600) umfasst:
eine Steuerung (610); und
eine Austrittstür (650), die so konfiguriert ist, dass sie die Austrittsöffnung (250) öffnet und schließt,
und
die Austrittstür (650) in einem Luftreinigungsmodus geöffnet und in einem Kleidungsmanagementmodus geschlossen ist.

8. Das multifunktionale Lagerungssystem nach Anspruch 1, wobei ein Rezirkulationsmodul (300) umfassend einen Rezirkulationsventilator an einem oberen Ende der Lagerungskammer (100) vorgesehen ist und das Rezirkulationsmodul (300) Luft in Richtung eines unteren Teils im Inneren der Lagerungskammer (100) austreten lässt.

## Revendications

1. - Système de stockage multifonctionnel comprenant :
une chambre de stockage (100) ;
une chambre de machines (200) située sur un côté de la chambre de stockage (100) ;
une partie de déshumidification (260) configurée pour déshumidifier de l'air circulant s'écoulant dans la chambre de stockage (100) ;
une entrée d'air circulant (141) et une sortie d'air circulant (142) configurées pour permettre à la chambre de stockage (100) et à la chambre de machines (200) de communiquer l'une avec l'autre ; et
une unité filtre de circulation (229) configurée pour distribuer de l'humidité à l'air circulant distribué à la chambre de stockage (100) par l'intermédiaire de l'entrée d'air circulant (141),
la chambre de machines (200) comprenant en outre :
une unité ventilateur (230) configurée pour faire circuler de l'air dans une direction ;
un orifice d'admission (210) et un orifice d'échappement (250) configurés pour permettre à de l'air extérieur de communiquer avec la chambre de machines (200) ;
une unité filtre de purification (219) configurée pour filtrer l'air extérieur introduit à travers l'orifice d'admission (210) ;
un premier élément de commutation de trajet d'écoulement (241) configuré pour ouvrir ou fermer l'entrée d'air circulant (141) ;
un second élément de commutation de trajet d'écoulement (242) configuré pour ouvrir ou fermer la sortie d'air circulant (142) ;
un premier trajet d'écoulement (220) configuré pour permettre à l'orifice d'admission (210) et à l'unité ventilateur (230) de communiquer l'un avec l'autre ; et
un second trajet d'écoulement (240) configuré pour communiquer avec chacun de l'orifice d'échappement (250), de l'unité ventilateur (230), du premier trajet d'écoulement (220) et de la chambre de stockage (100) ;
dans lequel, dans un mode de gestion de vêtements où la partie de déshumidification (260) fonctionne, de l'air d'humidification naturel généré par l'unité filtre de circulation (229) est configuré pour être distribué à la chambre de stockage (100) et amené à circuler à l'intérieur de celle-ci dans un état dans lequel la chambre de machines (200) est isolée de l'air extérieur et communique avec la chambre de stockage (100), l'entrée d'air circulant (141) et la sortie d'air circulant (142) sont configurées pour être ouvertes, et l'orifice d'admission (210) et l'orifice d'échappement (250) sont configurés pour être fermés ;
dans lequel, dans un mode de purification d'air pour filtrer l'air extérieur, la chambre de machines (200) est configurée pour être isolée de la chambre de stockage (100) et communique avec l'air extérieur de telle sorte que de l'air filtré par l'unité filtre de purification (219) est évacué vers un extérieur, l'entrée d'air circulant (141) et la sortie d'air circulant (142) sont configurées pour être fermées, et l'orifice d'admission (210) et l'orifice d'échappement (250) sont configurés pour être ouverts.

2. - Système de stockage multifonctionnel selon la revendication 1, dans lequel les premier et second éléments de commutation de trajet d'écoulement (241 et 242) permettent au second trajet d'écoulement (240) de communiquer de manière sélective avec l'orifice d'échappement (250) ou la chambre de stockage (100).

3. - Système de stockage multifonctionnel selon la revendication 1, dans lequel la chambre de machines (200) comprend en outre :
un réservoir d'eau d'alimentation (270) ; et
un réservoir d'eau de condensation (280), et
l'unité filtre de circulation (229) est disposée sur le premier trajet d'écoulement (220), l'unité filtre de circulation (229) reçoit de l'humidité en provenance du réservoir d'eau d'alimentation (270), et de l'eau de condensation générée par l'air circulant de la chambre de stockage (100) et de la chambre de machines (200) est stockée dans le réservoir d'eau de condensation (280).

4. - Système de stockage multifonctionnel selon la revendication 1, dans lequel le second trajet d'écoulement (240) est situé au-dessus de l'unité ventilateur (230) et du premier trajet d'écoulement (220).

5. - Système de stockage multifonctionnel selon la revendication 1, dans lequel l'entrée d'air circulant (141) et la sortie d'air circulant (142) sont situées entre le second trajet d'écoulement (240) et la chambre de stockage (100), l'entrée d'air circulant (141) est configurée pour communiquer avec l'unité ventilateur (230) de telle sorte que de l'air est évacué de la chambre de machines (200) vers la chambre de stockage (100), et la sortie d'air circulant (142) est configurée pour faire circuler de l'air à partir de la chambre de stockage (100) vers la chambre de machines (200).

6. - Système de stockage multifonctionnel selon la revendication 5, dans lequel une partie en communication avec l'entrée d'air circulant (141) dans la chambre de stockage (100) est inclinée vers le haut, de telle sorte que l'air introduit à partir de l'entrée d'air circulant (141) est évacué dans la chambre de stockage (100) tout en formant un angle prédéterminé par rapport à une surface de fond d'un intérieur de la chambre de stockage (100).

7. - Système de stockage multifonctionnel selon la revendication 1, comprenant en outre :
une porte (600) configurée pour couvrir des surfaces avant de la chambre de machines (200) et de la chambre de stockage (100) à l'exception de l'orifice d'admission (210),
la porte (600) comprenant :
un dispositif de commande (610) ; et
une porte d'échappement (650) configurée pour ouvrir et fermer l'orifice d'échappement (250), et
la porte d'échappement (650) est ouverte dans un mode de purification d'air et fermée dans un mode de gestion de vêtements.

8. - Système de stockage multifonctionnel selon la revendication 1, dans lequel un module de recirculation (300) comprenant un ventilateur de recirculation est placé à une extrémité supérieure de la chambre de stockage (100), et le module de recirculation (300) évacue de l'air vers une partie inférieure d'un intérieur de la chambre de stockage (100).
